(19) Europäisches Patentamt

European Patent Office

Office européen des brevets

(11) EP 4 718 030 A1

(12) **EUROPEAN PATENT APPLICATION**

(43) Date of publication:
01.04.2026 Bulletin 2026/14

(21) Application number: 24203481.7

(22) Date of filing: 30.09.2024

(51) International Patent Classification (IPC):
*G01C 21/30* (2006.01)     *G01S 5/16* (2006.01)

(52) Cooperative Patent Classification (CPC):
G01C 21/30; G01S 5/16

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Siemens Mobility GmbH
80997 München (DE)

(72) Inventors:
• **Schnapka, Thomas**
 **50226 Frechen (DE)**
• **Waschulzik, Thomas**
 **85354 Freising (DE)**

(74) Representative: **Siemens Patent Attorneys**
 **Postfach 22 16 34**
 **80506 München (DE)**

(54) **PROPAGATION OF UNCERTAINTIES IN MAP-BASED AGENT POSE ESTIMATION**

(57)    The invention relates to a computer-implemented method for agent localization and control using map data with associated uncertainty information. In a step, sensor data observing a scene from an agent's perspective is obtained. In a step, a map database is accessed to get localization map data for map elements in the scene, along with associated uncertainty map data for those elements. In a step, localization information for the agent is determined by comparing the sensor data to the localization map data. In a step, uncertainty information for the localization is determined based on the uncertainty map data. In a step, the agent or another agent is controlled based on the localization information and/or uncertainty information. A corresponding method for generating a map database is also provided. The methods are based on uncertainty data associated with the mapping process and propagate this uncertainty to the agent's pose estimation, which may allow for more robust agent control in environments where map data has varying levels of uncertainty.

FIG 3

EP 4 718 030 A1

**Description**

Technical field

The present invention relates to agent pose estimation using map data including associated uncertainty information, and in particular to a method and system for propagating uncertainties in map-based agent pose estimation.

Background

Map-based pose estimation is a widely used technique for determining position and orientation of agents such as robots or vehicles in various environments. For example, determining a pose of an autonomous vehicle, often relies on comparing sensor data from the agent's perspective to a map database. The map provides information about the environment to assist in estimating the agent's pose. However, the mapping process can introduce errors, so the information in the map may contain uncertainties.

Conventional approaches for map-based localization typically assume the map information is accurate and error-free, or that any error is tolerable and can be ignored in subsequent calculations. Oftentimes, plausibility of map elements is used to filter map data and thereby speed up processing. However, these approaches can lead to overconfidence in pose estimates or unnecessary discarding of valuable map data.

Accordingly, there is a need for improved techniques to enhance accuracy and reliability of map-based agent pose estimation.

Summary

This need is met by the subject matter of the independent claims. Further advantageous features are subject matter of the dependent claims.

In the following, the solution according to the present disclosure is described with respect to the claimed methods as well as with respect to the claimed devices and systems. Features, advantages, or alternative embodiments herein may be assigned to the other claimed subject matter, and vice versa. In other words, claims for the devices and systems may be improved with features described in the context of the methods, and the methods may be improved by features described in the context of the systems and devices. Additionally, it should be noted, that the solution according to the present disclosure is described with respect to map-based localization methods and corresponding methods for generating a map database that can be used in the map-based localization methods, wherein features, advantages, or alternative embodiments as described herein may be assigned to the other subject matter, and vice versa.

A computer-implemented method is provided, which can be performed by a variety of computational devices and systems. The method can, for example, be executed on-board an agent, such as within a computational system, for example a control device, of an agent. It could also be performed remotely, for instance on a cloud server or a distributed computing network. The method may be implemented on edge devices, central control stations, or a combination of local and remote systems. In some configurations, the method can be executed on dedicated hardware units, such as specialized processors or field-programmable gate arrays (FPGAs). The method could also be performed on mobile devices acting as interfaces for the agent, or on base stations coordinating one or multiple agents in a shared environment.

An agent in map-based localization may refer to a variety of entities capable of sensing their environment and determining their pose relative to a map, i.e. in a map coordinate system. This could include autonomous vehicles like self-driving cars, drones, or robots navigating indoor or outdoor spaces. It may also encompass mobile devices carried by humans, such as smartphones or augmented reality headsets. In industrial settings, an agent could be an automated guided vehicle (AGV) in a warehouse or a robotic arm in a manufacturing plant. Marine vessels, spacecraft, and even virtual agents in simulated environments can also be considered agents in the context of map-based localization. Essentially, any mobile entity equipped with sensors and the ability to process spatial information to determine its location within a mapped environment can be classified as an agent in map-based localization systems.

In a step, agent sensor data is obtained observing a scene from a perspective of an agent. The agent sensor data may be acquired using various types of sensors, located onboard, i.e., of the agent, or even external sensors. These sensors may include, for example, cameras capturing visible light, infrared sensors, ultraviolet sensors, or depth sensors such as LiDAR; RADAR or stereo cameras. The sensor data may also be obtained from radar systems, ultrasonic sensors, or magnetometers. The sensor may be configured to monitor a scene in the environment of the agent. The scene may comprise one or more (real-world) objects to be observed, which may comprise one or more landmarks to be observed, that correspond to map elements included in a map database.

The scene observed by these sensors may represent the surrounding environment of the agent from its current perspective.

A landmark may, for example, refer to a physical feature or characteristic, such as a 3D point of an object, in the real-world environment that an agent can observe and identify. This could include buildings, street signs, trees, road markings, statues, or any other distinctive structures or natural formations in the agent's surroundings. These objects are tangible, three-dimensional entities that exist in the physical world and can be detected by the agent's sensors. Landmarks may refer to parts and/or points and/or particular features of an object that can be sensed/detected and recognized by the agent, and which can be associated with a 3D (real-)world coordinate.

A map element may refer to a digital representation of a real-world landmark stored within a map database. These are typically described by spatial coordinates, geometric properties, and other relevant attributes that characterize the corresponding physical object and/or landmark. Map elements may include point features (like the location of a traffic light), linear features (such as road centerlines), or area features (like building footprints). Map elements may comprise positional information representing their location in the map coordinate system. They may serve as reference points or landmarks within the digital map, allowing an agent to compare its sensor observations of real-world landmarks to the stored map elements for localization.

In a further step, a (e.g., geo-spatial) map database is accessed to obtain localization map data for one or more map elements arranged in the perspective of the scene and associated uncertainty map data for the one or more map elements. The localization map data may comprise information stored in a map database that is used for determining an agent's position and orientation in an environment.

The map database, which contains the map elements, may be stored, and accessed in various ways depending on the agent's capabilities and the system's architecture. In some configurations, the map database may be stored locally within the agent itself, such as in the onboard memory of an autonomous vehicle or robot. This local storage allows for quick access to map data and enables the agent to perform localization even in areas with limited or no network connectivity. Alternatively, the map database may be stored remotely on cloud servers or distributed computing systems. In this case, the agent would need to maintain a network connection to access the map data in real-time. Some systems employ a hybrid approach, where a subset of the map database is stored locally for immediate use, while more comprehensive or updated map data can be accessed remotely as needed. The choice between local, remote, or hybrid storage depends on factors such as the agent's processing power, memory constraints, network availability, and the need for real-time updates to the map data.

The localization map data may comprise spatial information about the environment, including, for example, one or more map elements, spatial information of the one or more map elements, such as positions and characteristics of the map elements. These characteristics may correspond to characteristics that are observable by the agent in the scene based on sensors. Such map elements may include, for example, landmarks, roads, buildings, or other distinct features in the environment. The localization map data may provide spatial information or characteristics about these map elements. The uncertainty map data, which may be associated with one or more map elements, may include information about the potential errors or uncertainties of the positions and/or orientations (or poses), in general errors of characteristics, of the map elements in the localization map data. The uncertainty map data may be represented in various forms, for example as covariance matrices including direction- or orientation-dependent spatial uncertainty or probability values for map elements.

In general, uncertainty map data included in a map database associated with map elements may comprise a wide range of information/data that affect the reliability and accuracy of the localization map data, e.g., spatial data of each map element. These uncertainties may comprise one or more of positional, temporal, and qualitative aspects or uncertainties. Positional or spatial uncertainties may include variations in position, coordinates, orientation, and/or geometric properties of map elements. Temporal uncertainties may relate to the age of the data, frequency of updates, and potential changes in the environment over time. Qualitative uncertainties might include the classification accuracy of features, the reliability of data sources, or the consistency of information across different sensors or mapping methods.

In various examples, uncertainty map data may refer to direction-dependent uncertainty information associated with each or one or more map elements in the map database. This data quantifies how the accuracy and reliability of spatial information varies based on the orientation or direction from which a map element is observed or measured. The uncertainties can differ significantly along different spatial axes or viewing angles, reflecting the fact that some features or attributes of map elements may be more accurately determined from certain perspectives than others.

In some examples, this uncertainty map data may comprise, for example, standard deviations or covariance matrices for spatial coordinates, confidence intervals for feature attributes, probability distributions for element classifications, and reliability scores based on data collection methods. Environmental factors like weather conditions, seasonal changes, or time of day, during the mapping process, can also contribute to uncertainty in the map database. Additionally, sensor-specific error models, occlusion probabilities, and the likelihood of dynamic changes in semi-permanent features may be incorporated. Representation of these uncertainties in the map database allows localization algorithms to perform more robust agent pose estimates.

In various examples, it would be possible that the uncertainty map data derived from the map database may be position-dependent and/or orientation-dependent relative to the agent's pose. In some examples, the uncertainty information may be derived from the map database based on the position and/or orientation of the agent relative to the one or more map elements. Obtaining the uncertainty information from the map database may utilize the agent's position and/or orientation with respect to the map elements. The uncertainty map data may provide varying uncertainty values depending on the agent's spatial relationship to the map elements. Deriving the uncertainty information may involve considering the agent's pose relative to the positions of the one or more map elements in the map database.

For instance, the positional uncertainty of a building's edge might be lower when viewed perpendicular to the facade but higher when viewed at an oblique angle. Similarly, the height of a landmark might have different uncertainty values when measured from different directions due to occlusions or sensor limitations. This direction-dependent uncertainty data allows for a realistic representation of the potential errors in the map, enabling localization and navigation systems to adapt their strategies based on the specific orientation of an agent relative to the map elements. By incorporating this directional uncertainty map data, the map database provides a more precise set of information that can lead to more accurate and robust spatial localization, i.e., with direction dependent localization errors, as described herein.

The uncertainty map data may be direction-dependent, in particular for each of the map elements. The uncertainty map data may comprise different spatial uncertainty values in different spatial directions.

In some examples, the uncertainty map data may comprise uncertainty map element data for each of the one or more map elements. Uncertainty map element data may comprise different uncertainty values in different spatial directions regarding the localization map element data (representing the map element position in the map coordinate system).

The uncertainty map data and the uncertainty map element data may be represented in the form of covariance matrices. These matrices may represent direction-dependence and/or orientation-dependence of spatial uncertainties regarding position in the map coordinate system in different directions, reflecting that spatial uncertainties are not uniform in all spatial directions. The spatial uncertainties may refer to the spatial position and/or orientation (3D position and/or 3D orientation) associated with each map element in the map database.

For example, the (spatial) uncertainty associated with a map element might be represented as an ellipse rather than a circle in a two-dimensional space, as shown in the exemplary drawings. This elliptical representation may indicate that the uncertainty is greater along one axis than the other. In three-dimensional space, this concept may extend to ellipsoids. Representing the uncertainty map data as covariance matrices may allow for a mathematical description of these directional uncertainties. For a 2D scenario, a 2 x 2 covariance matrix would be used, where the diagonal elements represent variances in the x and y directions, while the off-diagonal elements capture the correlation between these directions. In 3D, a 3 x 3 matrix would be employed, comprising variances and correlations in x, y, and z directions. If the rotation of a map element is also taken into account, a 6 x 6 matrix for both translation and orientation can be chosen.

In a further step, localization information for the agent in the scene is determined based on the sensor data and the localization map data, for example based on a comparison of the sensor data with the localization map data. For example, the determination may involve aligning the observed sensor data with the retrieved localization map data to estimate the agent's position and orientation within the environment. The process may utilize various techniques such as feature matching, point cloud alignment, or probabilistic methods to compare the observed scene with the map data. The resulting localization information may, for example, include the agent's estimated pose, for example 3D position represented as 3D coordinates and/or orientation angles relative to a reference frame defined in the map database.

In a further step, uncertainty information for the localization information is determined based on the uncertainty map data. This step may comprise propagating the uncertainties associated with the map elements to the agent's localization information. The uncertainty information may represent the spatial uncertainty associated with the determined agent's localization information.

In various examples, the uncertainty map data, which may include probability values for map elements, such as covariance matrices, may be used to calculate the potential error in the agent's estimated position and/or orientation (i.e., pose). This process may take into account factors such as the reliability of different map elements, their observability from the agent's current perspective, and the inherent uncertainties in the mapping process. The resulting uncertainty information may comprise a measure of confidence in the agent's localization estimate.

The uncertainty information for the agent's localization may be based on the orientation and/or position and/or pose of the agent relative to the one or more map elements. Each map element in the database may have its own associated direction dependent uncertainty data, typically represented as covariance matrices or probability values. Therefore, for each map element, specific map element uncertainty data may be used in the calculation of the overall uncertainty information by taking into account the direction from which the agent observes the map element, in other words taking into account or using the agent's position and/or orientation and/or pose relative to each of the one or more map elements.

When determining the uncertainty information, the system uses the spatial relationship between the agent and the map elements. This relationship affects how the uncertainties associated with individual map elements contribute to the overall uncertainty of the agent's localization.

The process of determining the uncertainty information involves propagating the uncertainties from the map elements to the agent's localization estimate. This propagation takes into account, is based on, or uses one or more of:

The relative pose (position and/or orientation) of the agent with respect to each map element. The direction-dependent uncertainty of each map element as stored in the map database, and as included in the uncertainty map data. The observability of each map element from the agent's current perspective. The reliability or weight assigned to different map elements based on their characteristics or the current context.

The uncertainty information may provide a measure of confidence in the estimated pose, reflecting how the individual uncertainties of map elements combine and contribute to the overall uncertainty of the agent's position and orientation in the environment.

In a further step, the agent or a further agent is controlled based on the localization information and the uncertainty information, or in some examples based on only one of the localization information and the uncertainty information. This control step may utilize the determined localization and/or uncertainty information to guide the agent's or a further agent's actions or decisions. For example, the control step may involve adjusting the agent's movement, speed, or trajectory based on its estimated position and the associated uncertainty. For instance, in areas with high localization uncertainty, the agent may be directed to move slower or request additional sensor information. The control may comprise coordinating actions with other agents in the environment, taking into account the localization and uncertainty information of all involved agents. In some examples, the uncertainty information and/or the localization information may be correlated and/or associated with sensor data streams generated by the sensors or further sensors. This association or registering to sensor data may combine the determined localization and uncertainty data to corresponding sensor measurements by the agent. Such sensor data streams may include input from various sensors such as cameras, LiDAR, radar, or other perception systems.

In general, agent sensor data may be understood as data collected by sensors of an agent, such as a vehicle or robot, which provides information about its environment or surroundings including a number of elements represented in the map database as map elements. A map database may be understood as a structured collection of spatial data representing the environment, including both localization map data and uncertainty map data. Localization map data may be understood as information about the position and characteristics of map elements in the environment. Uncertainty map data may be understood as information about the potential errors or uncertainties associated with the localization map data. Localization information may be understood as the estimated position and orientation of the agent within the environment. Uncertainty information may be understood as a measure of the reliability or potential error in the localization information.

An effect may be improved accuracy and reliability of agent pose determination in complex environments. By propagating uncertainty map data through the localization process to the agent's localization information, the method allows an exacter and pose-dependent error determination for the agent's pose, taking into account uncertainties in the map database. This can lead to more robust decision-making in agent control. Another effect may be enhanced safety in autonomous systems by more adaptive and context-aware navigation.

A further aspect of the present disclosure relates to a corresponding computer-implemented method for generating a map database. The map databased may be used, for example, in any computer-implemented localization method described herein for controlling an agent.

In a step, sensor data of a scene is obtained from multiple agent perspectives. This sensor data may be collected using various types of sensors such as cameras, LiDAR, radar, or other sensing devices. The multiple agent perspectives may involve data collection from different positions, orientations, or even different types of agents, providing a diverse set of observations of the same scene.

In a further step, localization map data for one or more map elements in the scene is determined based on the sensor data. This process comprises analyzing the collected sensor data to identify distinct features or elements in the environment that can serve as reliable reference points for localization. These map elements may include landmarks, buildings, road features, or other identifiable objects in the scene.

In a further step, uncertainty map data for the one or more map elements is calculated based on variations in the sensor data from the multiple agent perspectives. This calculation may take into account the differences and inconsistencies in how each map element is perceived from different viewpoints. The uncertainty data may reflect factors such as measurement noise, occlusions, or variations in environmental conditions that affect the reliability of the observations.

In a further step, the localization map data and the uncertainty map data are stored in the map database for subsequent use in agent localization and control. The database may include various data structures to represent both the spatial information of map elements and their associated uncertainties.

Such a map databases allows for more precise control of an agent based on agent localization information and associated uncertainty information.

A further aspect of the present disclosure relates to a control device for an agent. The control device may be on-board the agent or located remote and communicatively coupled with the agent. The control device comprises a sensor interface configured to receive agent sensor data observing a scene from a perspective of the agent. The control device comprises a processor. The control device comprises a memory storing a map database, and instructions that, when executed by the processor, cause the control device to perform any method or combination of methods according to the present disclosure.

A sensor interface may be understood as a hardware or software component that facilitates communication between sensors and the control device, enabling the reception and processing of sensor data. A processor may be understood as a computational unit capable of executing instructions and performing calculations. Memory may be understood as a storage component that comprises data and instructions for use by the processor. A map database may be understood as a structured collection of spatial and uncertainty data representing the environment.

An effect may be the integration of advanced localization and uncertainty management capabilities into the agent's control system. By incorporating the map database and the associated processing methods within the control device, the agent may perform real-time localization and uncertainty assessment independently in real-time. This integration may lead to faster response times and more autonomous operation.

A further aspect of the present disclosure relates to a non-transitory computer-readable medium. The non-transitory computer-readable medium stores instructions. When executed by one or more processors, these instructions cause the one or more processors to perform any method or combination of methods according to the present disclosure.

A non-transitory computer-readable medium may be understood as a storage device capable of holding digital information for extended periods without power, such as solid-state drives, hard disk drives, or ROM chips. Instructions may be understood as a set of commands or code that direct the operation of a processor. One or more processors may be understood as computational units capable of executing instructions and performing calculations, which may be part of a single device or distributed across multiple devices.

Although specific features described in the above summary and the following detailed description are described in connection with specific examples, it is to be understood that the features may not only be used in the respective combinations, but may also be used isolated, and features from different examples may be combined with each other, and correlate to each other, unless specifically noted otherwise.

Therefore, the above summary is merely intended to give a short overview over some features of some embodiments and implementations and is not to be construed as limiting. Other embodiments may comprise other features than the ones explained above.

Brief description of the drawings

In the following, concepts in accordance with exemplary embodiments of the invention will be explained in more detail with reference to the following drawings.

Fig. 1 schematically illustrates conventional mapping and localization techniques.

Fig. 2 schematically illustrates a method for generating a map database, according to various examples.

Fig. 3 schematically illustrates a map-based agent pose estimation method, according to various examples.

Fig. 4 schematically illustrates a plausibility check for map elements for the method of Fig. 3, according to various examples.

Fig. 5 schematically illustrates steps of a map-based agent pose estimation method, according to various examples.

Fig. 6 schematically illustrates steps of a map database generation method, according to various examples.

Fig. 7 schematically illustrates an agent configured for carrying out any method according to the present disclosure.

Detailed description of embodiments

The above and other elements, features, steps, and concepts of the present disclosure will be more apparent from the following detailed description in accordance with exemplary embodiments of the invention, which will be explained with reference to the accompanying drawings.

Some examples of the present disclosure generally provide for a plurality of circuits, data storages, connections, or electrical devices such as e.g., processors. All references to these entities, other electrical devices, and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

The use of position or pose estimation in safety-critical applications often requires specifying an error level for the estimation. For example, the maximum error of a position estimate can be estimated with a certain confidence, which can then be considered as a spatial safety buffer. Alternatively, the estimate can be discarded if the error is too large.

An important approach in this field is map-based positioning. Here, a map is used as a source of information that provides the system with additional information about a location. Since the mapping process itself is a source of error and thus erroneous information may be contained in the map, these errors must be taken into account during further processing. This is necessary to ensure the integrity of a position estimate or even to be able to assess it if necessary. A specific example of this is visual localization. Based on reference data, it is possible to determine the position of landmarks (in this case corners) during a mapping process. These are stored in the map and used as information during localization to estimate a position.

So far, different common approaches are known regarding errors in map-based position estimates. The map information is either assumed to be certain and error-free. In some cases, a certain error value may be present, but it is considered tolerable and therefore not taken into account in further calculations. In other cases, the map information is assumed to be potentially erroneous. During position estimation, the plausibility of the map information is checked. Individual or all map information is discarded or not further considered if it is classified as unreliable. In the above-mentioned example of camera-based localization, it can be checked whether all landmarks recognized in the image are actually spatially located at the expected location.

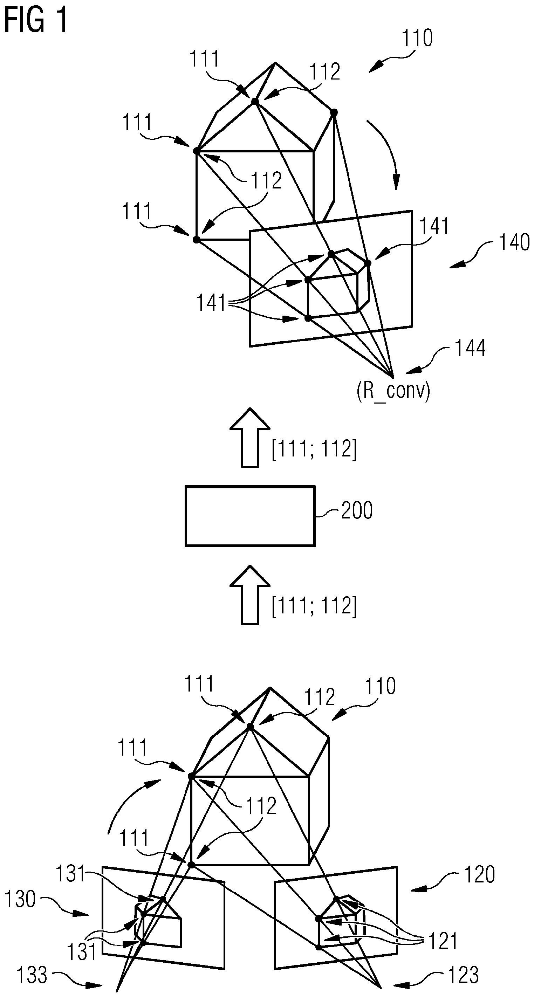

Fig. 1 schematically illustrates a conventional localization method.

As shown in the lower half of Fig. 1, the process begins with a mapping phase, wherein a map 200 is created. For example, a 3D object 110 in the agent environment is observed from multiple perspectives 120,130 with known agent poses 123, 133. A first mapping perspective 120 corresponds to a first known agent pose 123, and a second mapping perspective 130 corresponds to a second known agent pose 133. From these known agent poses, landmarks 111 are observed under the respective different perspectives 120 and 130. Landmarks 111 may also be referred to as environmental/spatial landmark or feature, which may refer to a distinctive environmental element that can be observed in the real world and represented in a map database, and may be used as a reference for agent pose estimation.

From the first mapping perspective 120, the landmarks 111 appear to the agent in the first perspective 120 as observed landmarks 121. From the second perspective 130, the landmarks 111 appear in the second perspective 130 as observed landmarks 131. The observed landmarks 121, 131 are identified, i.e., where they appear in the respective perspectives 120, 130. Based on the perspective position where the landmarks 121,131 appear in the respective perspectives, location map element data 112 is calculated for the landmarks, which represents spatial information describing the position (for example respective 3D coordinates in a map coordinate system, e.g., 3D world points) in the map coordinate system for each landmark 111. The landmarks 111 associated with location map element data 112 are stored as localization map data comprising map elements [111; 112] in the map 200.

The map elements may also be referred to as 3D world points representing the landmarks and their associated positional data in the map.

This mapping procedure, i.e., the phase in which the map database 200 is generated, may involve, for example, known triangulation techniques, where multiple perspectives onto landmarks 111, which can be for example distinctive points of one or more objects 110, are used to reconstruct respective 3D positions (3D coordinates) in the map coordinate system. In various examples, such a "3D from 2D" reconstruction creates a map of the environment stored in the database 200, the map including a plurality of map elements associated with real world landmarks 111.

As shown in the upper half of Fig. 1, a conventional agent localization process may be performed based on the map 200. Therein, the agent observes the object 110 in the environment under a third unknown perspective 140, corresponding to an unknown agent position 144. In this perspective, the agent observes the landmarks, and detects and identifies them as landmarks 141 in the perspective 140. The agent obtains localization map data comprising the multiple map elements [111; 112] from the map 200. The agent matches observed landmarks 141 to map elements [111; 112]. In other words, the agent employs a matching process between the observed map elements 141 and the stored landmarks 11 with associated location map element data 112 based on the map database 200. Further, the agent determines the agent's pose based on the mapping of the map elements to the observed landmarks 141 using the associated respective location map element data 112. For example known localization techniques based on observed landmarks may be employed, such as for example "Perspective-n-point solving," wherein a camera pose is determined that creates a given perspective onto a set of observed landmarks. This technique may be referred to as 6DOF localization. It is to be understood that other known techniques for determining an agent's position may be employed.

The result of this localization process is the agent's conventional localization information R_conv, 144. This localization typically represents the agent's position in the map's coordinate system. These conventional techniques rely on a map 200 without uncertainty information. However, such techniques do not take into account potential spatial uncertainties in the map 200 data, in particular uncertainties of the stored location map element data 112 in the map coordinate system.

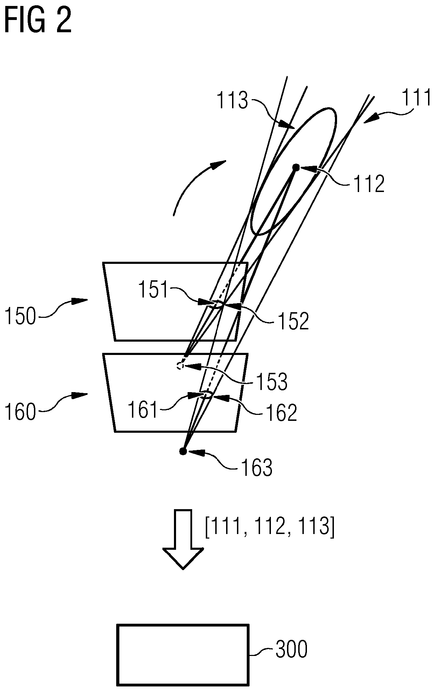

Fig. 2 schematically illustrates a method for generating a map database 300, according to various examples.

As shown in Fig. 2, the mapping process for generating a map database 300 builds upon the same techniques as shown in Fig. 1. As in Fig. 1, the process involves observing landmarks 111 of a real-world object 110 from multiple perspectives 150,160 to create a map database 300, including one or more map elements represented as [111; 112; 113]. Accordingly, similar considerations and features as described for Fig. 1 also apply to Fig. 2, wherein the techniques according to the present disclosure further additionally introduce spatial uncertainty propagation, as will be described in the following.

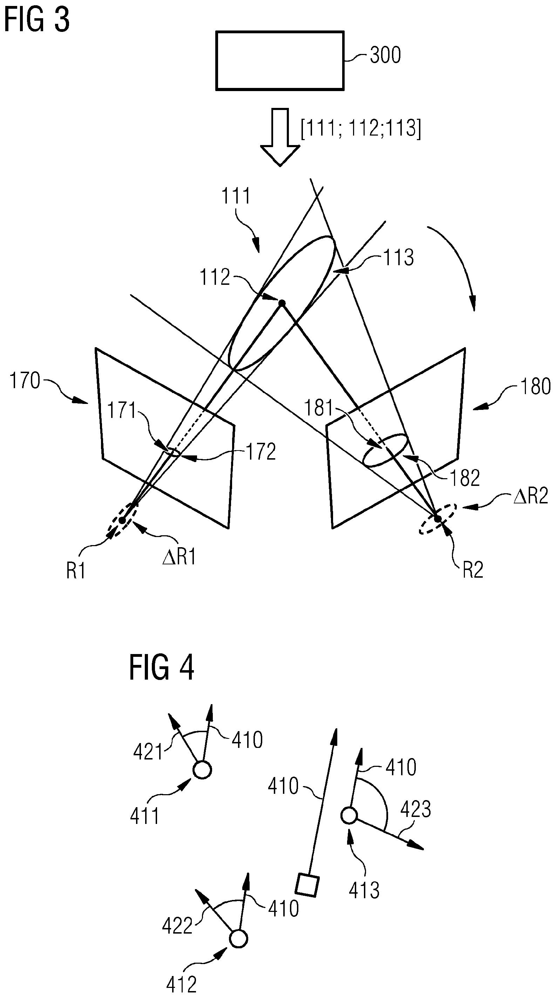

In general, with regard to Figs. 2 and 3, the techniques are described based on the findings that a map database 300 can include localization map data and associated uncertainty map data. In various examples, the uncertainty map data may include uncertainty map data for each respective one or more map elements stored in the map database 300. In other words, the uncertainty map data may comprise uncertainty map element data for each of one or more map elements. The uncertainty map data may comprise spatial uncertainty values associated with each of the one or more map elements in the map coordinate system, i.e., uncertainties or errors associated with the 3D spatial location map element data 112 of each landmark 111 each map element [111; 112; 113].

The uncertainty map data itself may be direction-dependent or orientation-dependent, i.e., it may specify different uncertainties or uncertainty values for/in different spatial directions, particularly separately for each of the one or more map elements. By using direction-specific, in other words directional, uncertainty map data associated with each of one or more map elements, a more precise localization and pose estimation may be performed.

Localization map data may refer to the spatial information stored in a map database that is used for determining an agent's position and orientation in an environment. The localization map data may comprise one or more map elements [111; 112] stored in the map database.

A map element may correspond to and/or or comprise a landmark 111, which is a distinctive feature or landmark in the environment. A map element may further comprise its associated landmark position 112, which may comprise the spatial coordinates of the landmark in the map's coordinate system. In general, the localization map data may comprise at least one or a plurality of such map elements.

This data is typically created during a mapping phase, where landmarks are observed from multiple known perspectives and their 3D positions are determined using techniques such as triangulation, these landmarks 111 and their associated landmark location map element data 112 are stored as map elements in the map database.

The localization map data serves as a reference against which an agent's sensor observations are compared during the localization process.

It allows an agent to determine its own position and orientation by matching observed landmarks to the stored map elements.

For the agent's localization information, uncertainty information may be determined. Determining the uncertainty information may comprise propagating the map uncertainty map data to the agent's pose estimation. Propagating the map uncertainty map data to the agent's pose estimation may comprise propagating map uncertainty map data to a perspective spatial uncertainty 172,182 of an observed map element's position 171, 181 in an observing perspective 170,180. The perspective spatial uncertainties 172,182 associated with each the observed landmark 111 in the observing perspective 170,180 may be further propagated from the observing perspectives 170,180 to the uncertainty information ΔR1 and ΔR2 associated with the estimations for different agent's poses R1 and R2. In other words, the uncertainty map data may be used in a calculation to determine uncertainty information associated with the agent's localization based on an error propagation, as described herein.

In general, a localization may refer to a position and/or an orientation and/or a pose of the agent. The agent's localization uncertainties, i.e., the agent's uncertainty information associated with the agent's localization information, may be direction-dependent, i.e., orientation-dependent, and/or position-dependent and/or pose-dependent. The dependencies may be relative to the one or more map elements. The dependencies may be relative between the agent's pose the respective map element used for determining the agent's localization information. In other words, when taking into account the uncertainty map data, the techniques according to the present disclosure may further use the agent's localization to determine the uncertainty information from the uncertainty map data based on the agent's position and/or orientation and/or pose. By comparing the agent's localization information, i.e., current estimate of position and/or orientation and/or pose of the agent, to the positions- and/or orientation- and/or pose-dependent uncertainty information included in the map database, the agent's uncertainty information may be determined differently for different poses of the agent.

As can be seen in Fig. 2, the mapping process is described for an exemplary landmark 111, wherein it is to be understood that similar techniques can be applied to each of a plurality of further landmarks 111 in the environment to be included in the map database 300.

In a step, sensor data is obtained of a landmark 111 in the environment from multiple agent perspectives 150,160. This corresponds to the multiple viewpoints 150, 160 shown in Fig. 2.

The exemplary landmark 111 depicted in Fig. 2 is observed from multiple perspectives, including perspectives 150 and 160, which correspond to known agent positions 153 and 163, respectively. From the first perspective 150, landmark 111 appears as observed landmark at a first perspective position 151 associated with measurement-based uncertainty information 152. Similarly, from the second perspective 160, landmark 111 appears as observed landmark at a second perspective position 161 associated with measurement-based uncertainty information 162. The measurement-based uncertainty information 152, 162 may be perspective-dependent, and derived based on various described uncertainty factors associated with the sensor data acquired from the respective perspective 150,160, the known positions 153,163, and the localization techniques deployed for generating the localization map data, and represent the uncertainties of the spatial position landmark 111 based on in the respective perspective view 150,160. As shown in Fig. 2, the measurement-based uncertainty information 152, 162 may be direction dependent as shown by the elliptical shapes 152,162. the measurement-based uncertainty information 152, 162 may correspond to spatial uncertainties of the observed landmark 11 position.

In a step, based on the agent sensor data, localization map data is determined, which comprises localization map element data 112 for each of the one or more map elements. The perspective positions 151,161 are combined using known triangulation techniques to determine location map element data 112.

The localization map data comprises one or more map elements [111; 112], which represent respective landmarks 111 and their position in the scene. This may be performed similarly to identifying the landmarks 111 and their location map element data 112 as shown in Fig. 1, for example by known triangulation techniques.

Around the location map element data 112 of landmark 111, Fig. 2 illustrates the uncertainty map element data 113 as an elliptical graphical element around the object position 112, representing different spatial uncertainty values in different spatial directions.

In a step, the measurement-based uncertainty information 152, 162 are combined to generate uncertainty map element data 113 for the location map element data 112. The uncertainty map element data 113 is direction-dependent, as shown by the elliptical shape in Fig. 2. In other words, the uncertainty map data is calculated by propagating the measurement errors for the one or more map elements based on variations in the sensor data from the multiple agent perspectives for the determined localization map data.

The localization map element data 112 and uncertainty map element data 113 of each of a plurality of landmarks may be stored in the map databased 300 and may be referred to location map data respectively as uncertainty map data, to be used subsequently use in agent localization and control. In other words, the localization map data may comprise localization map element data 113 of each of one or more map elements. The uncertainty map data may comprise uncertainty map element data 113 of each of one or more map elements.

The uncertainty map data may be calculated based on the spatial uncertainties 152, 162 and further based on the agent's localization information, i.e., based on the agent's position and/or orientation and/or pose. For each landmark 111, the corresponding uncertainty map element data 113 may be calculated based on the measurement-based uncertainty information 152, 162 and stored comprised in the uncertainty map data associated with the respective landmark in the map database 300.

The measurement-based uncertainty information 152,162 itself is direction-dependent, i.e., different in different spatial directions, and accordingly is different in each observation perspective 150, 160. The measurement-based uncertainty information 152,162 is each propagated and combined to calculate direction-dependent uncertainty map element data 113 associated with the location map element data 112 of the landmark 111. The measurement-based uncertainty information 152,162 may be weighted differently or excluded based on a plausibility check for each map element, as further described herein, in order to generate uncertainty map data.

In general, in addition to spatial information about map elements, the map database 300 can also contain uncertainty information related to the spatial information. The uncertainty of map information can be estimated, for example, during the mapping process, as described with regard to Fig. 2.

The uncertainty map data can be stored in various forms. One common approach is using a covariance matrix, which indicates the spatial uncertainty of the location information in a direction-dependent manner. Alternatively, the probability that a specific landmark actually exists at a particular location can be specified as a simple probability value. The specific method for determining uncertainty depends on the mapping technique employed.

In the example of Fig. 2, the measurement-based uncertainty information 152 and 162 associated with the observed object positions 151 and 161 in the respective perspectives may define a plurality of different spatial uncertainties as illustrated by elliptic shapes 152,162 in Fig. 2. measurement-based uncertainty information 152 and 162 specific for each perspective may be further propagated through the localization calculation and combined to create the direction-dependent uncertainty map element data 113 for the position and/or orientation (pose) 112 of landmark 111.

Using triangulation techniques similar to those described for Fig. 1, these individual observed object positions 151, 161 and measurement-based uncertainty information 152,162 are used to calculated location map element data (i.e. 3D position and/or orientation (pose) 112 for each landmark 111) and associated uncertainty map element data 113 associated with 3D position and/or orientation (pose) 112 of landmark 111.

The resulting map database 300 stores each landmark 111 associated with the respective location map element data 112 and uncertainty map element data 113 as map element [111; 112; 113].

This approach effectively projects uncertainties from 2D perspective mapping images to map elements stored in a map database, thereby providing a more robust localization.

Fig. 3 schematically illustrates a map-based localization method, according to various examples.

As can be seen in Fig. 3, the map database 300 is used to determine localization information for two different agent poses R1 and R2. Agent poses R1 and R2 represent different positions and orientations of the agent defining two different viewing perspectives, which may be previously unknown and are to be determined during a map-based agent pose estimation.

The map database 300 includes localization map data [111; 112] and uncertainty map data [113], in other words a plurality of map elements [111; 112; 113] as described in relation with Fig. 2, wherein each map element represents as respective landmark 111 and is associated with a respective localization landmark data (i.e.

position of the landmark) 112 and associated uncertainty map element data 113.

The two different agent poses R1 and R2 are associated with two different agent perspectives 170,180 onto landmark 111, which are depicted as rectangular planes, representing different viewing angles of the same landmark 111. It is to be understood that for reliable agent localization it advantageous to observe a plurality of landmarks 111.

The landmark 111 appears from each agent pose R1 ,R2 at observed object positions 171,181 in the respective perspective 170,180. These positions are depicted as points 171,181 on the perspective planes, representing how and where the map element appears from each perspective 170,180. The perspective spatial uncertainties shown as ellipses 172,182 around the observed positions 171,181 represent the spatial uncertainties in the landmark position 171,181 different from each perspective, due to the direction-dependent uncertainty map data and the different agent's poses R1, R2.

Localization Uncertainties $\Delta R1$ and $\Delta R2$, depicted as ellipses around the agent poses R1,R2, represent the uncertainty in the agent's estimated position and orientation.

Fig. 3 illustrates how the map-based localization method utilizes the map database 300 to determine localization information and uncertainty information for each of two different initially unknown agent poses R1 and R2. The map database corresponds to the map databased 300 of Fig. 2 and contains one or more map elements, each represented as [111; 112; 113], where 111 represents the landmark, 112 corresponds to its 3D position, and 113 corresponds to its associated positional or spatial uncertainty.

In a step, a scene is observed by an agent. Agent sensor data observing the scene from the perspective 170 of the agent is obtained. The sensor data may observe a plurality of different landmarks 111 of the environment, in order to estimate an initial agent pose R1, as described in relation with Fig. 1.

The map database 300 may be accessed to obtain data related to one or more map elements [111; 12; 113] which comprise the localization map data for one or more map elements arranged in the perspective of the scene and associated uncertainty map data for the one or more map elements. As described for Fig. 2, The localization map data may comprise a plurality of landmarks 111 and associated 3D positions (i.e., localization map element data) 112.

In a step, the map database 300 of Fig. 2 is accessed to obtain localization map data for one or more map elements [111; 112] arranged in the perspective of the scene and associated uncertainty map data [113] for the one or more map elements.

In a step, localization information for the agent in the scene is determined based on a comparison of the sensor data and the localization map data.

In various examples, using on the localization map data, the localization information for the agent in the scene may be determined based on a mapping of the sensor data (including the observed landmarks 171,181 and to the localization map data associated with one or more map elements. This can be done, for example, by known triangulation techniques, as described in relation with Fig. 1.

The localization process may use the perspective 170 towards different landmarks 111 to estimate the agent's pose R1 respectively R2 in the environment. Each estimated pose has associated uncertainty information, shown as ΔR1 respectively ΔR2 which are represented as dotted ellipses to indicate their directional variations in spatial uncertainty.

Therein, the obtained uncertainty map data may comprise uncertainty map element data 113 for each or the map elements representing landmarks 111. These uncertainties are also represented as ellipses, indicating that the uncertainties are direction-dependent, i.e., may vary in different spatial directions.

Based on the uncertainty map data, uncertainty information ΔR1 for the localization information may be determined. In various examples, the determining of uncertainty information may be performed based on the direction-dependent uncertainty map element data 113. In various examples, the determining of uncertainty information may be performed further based on the estimated agent position and/or agent orientation and/or agent pose.

Similarly, the agent position R2 and associated uncertainty information ΔR2 can be determined based on the perspective 180.

As can be seen in Fig. 3, the spatial dependency of the uncertainty map element data 113 and different agent poses R1 and R2 lead to different uncertainty information ΔR1 and ΔR2 for each perspective 170,180, in particular in a perpendicular plane relative to a central line from the agent's position R1 to the landmark 111, as can be seen by differently rotated ellipses ΔR1 and ΔR2 in Fig. 3.

Based on the localization information and/or the uncertainty information, the agent or a further agent can be controlled in the environment.

As can be seen in Fig. 3, the uncertainty map element data 113 is propagated differently to the perspective spatial uncertainties 172, 182, which can be determined from the uncertainty map element data 113 based on the used localization technique for determining the initial estimation of R1 respectively R2 and further based on the pose of the agent.

Fig. 3 demonstrates how the uncertainty in the map element's position 113 propagates through the observation process to perspective spatial uncertainties 172, 182 and further propagates to the spatial uncertainty in the agent's estimated pose ΔR1, ΔR2.

The perspective spatial uncertainties 172 and 182 represent spatial uncertainties of the observed landmarks 171,181 in the agent's perspectives 170,180. The spatial uncertainties 172 and 182 can be determined based on the pose of the agent R1 or R2, wherein they are specific to each observation perspective 170 and 180 of the agent based on the direction dependent uncertainty map data.

The perspective spatial uncertainties 172 and 182 illustrate how the landmark's position comprises a different spatial uncertainty from the agent's current viewpoint R1, R2 based on different perspectives 170,180. The perspective spatial uncertainties 172 and 182 are derived by propagating the uncertainty map element data 113 from the map database to the agent's current perspective, taking into account the estimated pose of the agent (R1 or R2). The elliptical shape of these perspective spatial uncertainties 172 and 182 indicates that the uncertainty may vary in different directions depending on the agent's perspective. The perspective spatial uncertainties 172 and 182 represent an intermediate step in propagating uncertainty from the map data to the final localization uncertainty.

This propagation of uncertainty from the mapping process to the localization by through direction-dependent spatial uncertainties associated with each of one or more map elements allows for more accurate and reliable localization by considering not just the positions of map elements, but also the uncertainties associated with those positions derived from the mapping process.

One conceivable approach for uncertainty propagation is to model the respective process and subsequently linearize it. In this case, for a linearized process at point $f^0$ with Jacobian matrix $J_f$, we have:

$$y = f(x) \approx f^0 + J_f x$$

The covariance matrix $\Sigma_x$ of the variable x and the mean $\mu_x$ can be propagated as follows:

$$\Sigma_y = J_f \Sigma_x J_f^T$$

$$\mu_y = J_f \mu_x + f^0$$

The primary objective is to propagate the uncertainties of the information from the mapping process through the map to the localization, in order to subsequently perform an estimation of position uncertainty. This could potentially increase the safety reliability (integrity) of the position determination, potentially allowing for the omission of other sensors (e.g., additional, or expensive GNSS sensors).

While current solutions use map information for localization, they do not consider the uncertainties during the mapping process and do not propagate them to the pose estimation. Instead, the observability of map elements is used to filter map information to accelerate processing, but not for integrity consideration.

This disclosed techniques provide an advancement in map-based localization techniques. By incorporating uncertainty map data and propagating it through the localization process to derive uncertainties for localization information representing an agent's pose, it is possible to achieve more robust pose estimation. This is particularly crucial in safety-critical applications where understanding the confidence level of a pose estimate can inform decision-making processes and enhance overall system performance.

Fig. 4 schematically illustrates a plausibility check for map elements, according to various examples.

As can be seen in Fig. 4, observability of map elements 411,412,413 is used to validate the use of map elements 411,412,413 for localization.

Fig. 4 shows three map elements 411,412,413 in the environment. Each of these map elements 411,412,413 has a respective associated observability vector 421,422,423, which are depicted as a small arrows originating from the respective map element. These observability vectors 421,422,423 indicate the directions or angular range from which each map element 411,412,413 can typically be observed or seen.

The larger arrow 410 represents the current viewing direction of the agent. This viewing direction 410 corresponds to a location hypothesis of the agent performing the localization.

The plausibility check process is performed based on the relationship or comparison between the current viewing direction 410 and each observability vectors 421 of each map element:

For the two map elements 411,412 on the left side of the image, their observability vectors 411,412 form relatively small angles with the current viewing direction 410. This alignment suggests that these elements are likely visible from the agent's current perspective and thus considered plausible observations. This may, for example, be determined by comparing the formed angles with an angular threshold.

In contrast, the map element 413 on the right side has an observability vector 423 that forms a relatively large angle with the current viewing direction 410. This significant misalignment indicates that this particular element is probably not visible from the current perspective.

Fig. 4 demonstrates how the system checks if map elements are plausible, i.e., observable, from a specific position and/or orientation (i.e., pose) of the agent.

This plausibility check serves multiple purposes in the localization process. It helps validate the use of map elements for localization by ensuring only observable elements are considered. It can be used to assign reliability weightings to different map elements based on their likely observability. It allows for the potential exclusion of map elements that are determined to be implausible observations from the current perspective.

By incorporating this observability information and plausibility check, the localization system can enhance its accuracy and reliability, particularly in complex environments where not all map elements may be visible from every position.

As part of the uncertainty information, the observability information of map elements can also be stored in the map, for example as respective observability information associated with each of the one or more map elements or landmarks. This information can be used during the localization process to determine whether certain map contents are measurable at a specific position. For example, regarding visual localization with landmarks, it can be determined whether a particular landmark is visible from a specific perspective or if it is occluded by another object.

If a landmark is observed but, according to the uncertainty map data in the map database, should not be observable at that location, this information can be incorporated into the integrity determination of the positioning. This is because either the measurement or the position estimate could contain an error in this case. In the visual localization example, each landmark could be assigned a vector indicating the observation direction during mapping.

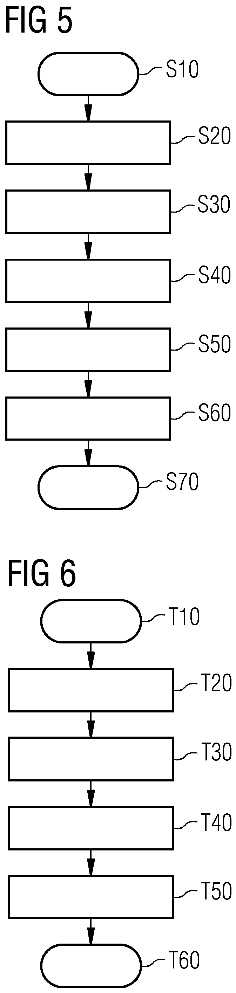

Fig. 5 schematically illustrates steps of a map-based localization method, according to various examples.

The method starts in step S10 In step S20, agent sensor data is obtained observing a scene from a perspective of an agent. In step S30, a map database is accessed to obtain localization map data for one or more map elements arranged in the perspective of the scene and associated uncertainty map data for the one or more map elements. In step S40, localization information for the agent in the scene is determined based on a comparison of the sensor data and the localization map data. In step S50, uncertainty information for the localization information is determined based on the uncertainty map data. In step S60, the agent or a further agent is controlled based on the localization information and/or the uncertainty information. The method ends in step S70.

Fig. 6 schematically illustrates steps of a map-based localization method, according to various examples.

The method starts in step T10. In step T20, sensor data of a scene is obtained from multiple agent perspectives. In step T30, localization map data for one or more map elements in the scene is determined based on the sensor data. In step T40, uncertainty map data for the one or more map elements is calculated based on variations in the sensor data from the multiple agent perspectives. In step T50, the localization map data and the uncertainty map data are stored in the map database for subsequent use in agent localization and control. The method ends in step T60.

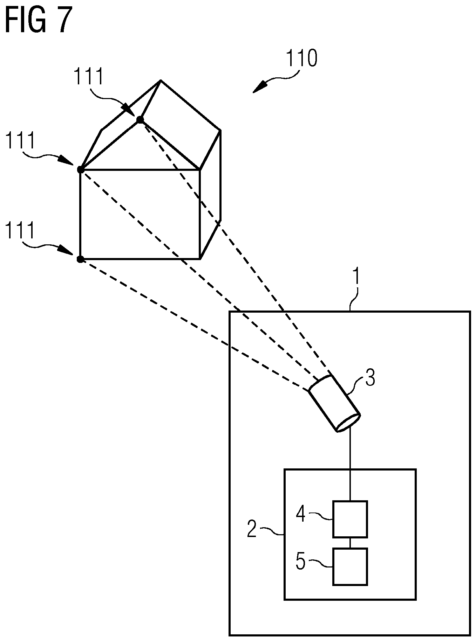

Fig. 7 schematically illustrates an agent configured for carrying out any method according to the present disclosure.

As can be seen in Fig. 7, an agent 1 comprises a control device 2 coupled to a sensor 3, such as a camera. The control device contains a processor 4 and memory 5, which comprises a map database and instructions for executing any method or combination of methods according to the present disclosure.

The agent observes a real-world object 110 in its environment using the sensor 3. This object has several landmarks 111 that serve as landmarks or reference points for localization. The sensor 3 is positioned to observe these landmarks, allowing the agent to gather sensor data about its surroundings.

The control device receives and processes the sensor data. This configuration allows the agent to execute any method or combination of methods according to the present disclosure, including map-based localization, uncertainty propagation, and adaptive navigation based on both localization information and associated uncertainties.

From the above said, the following general conclusions may be drawn:

In various examples, the uncertainty map data and/or each uncertainty map element data associated with the one or more map elements, may be direction-dependent. This may refer to the fact that uncertainty map data and/or each uncertainty map element data comprises or is indicative of multiple positional uncertainty values associated with the localization map data respectively localization map element data. These positional uncertainty values each may be associated with each of the one or more coordinate axes of the map coordinate system. The positional uncertainty values may be used to derive a different positional uncertainty along each of multiple spatial directions, for example for a map element.

Multiple positional uncertainty values may be understood as a set of values representing the potential errors or uncertainties in the position of a map element. Spatial directions may be understood as the different axes or dimensions along which the position of a map element can vary, typically including x, y, and z coordinates in a three-dimensional space.

An effect of this arrangement may be an improved representation of uncertainties in the map data. By providing multiple uncertainty values for each map element along different spatial directions, the system may account for varying degrees of uncertainty in different dimensions. This may lead to more accurate and reliable localization, as the agent can consider directional uncertainties when matching its sensor data to the map. For instance, a landmark's position might be more certain in its horizontal location but less certain in its vertical position, and this arrangement allows for such distinctions. Furthermore, this detailed uncertainty representation may enable more sophisticated decision-making algorithms, potentially improving the safety and efficiency of agent navigation in complex environments.

In various examples, the uncertainty information may be based on one or both of two types of information. It may include map-based uncertainty information. This map-based uncertainty information may be derived from the uncertainty map data. The uncertainty information may also include measurement-based uncertainty information. This measurement-based uncertainty information may be derived from acquiring the agent sensor data.

Map-based uncertainty information may be understood as the uncertainty inherent in the map data itself, reflecting potential uncertainties in the mapping process. Measurement-based uncertainty information may be understood as the uncertainty arising from the agent's sensor measurements, which can be affected by factors such as sensor noise, environmental conditions, or limitations in sensor capabilities.

An effect of this arrangement may be an improved assessment of the overall uncertainty in the agent's localization. By including uncertainties from one or both of the map and the real-time measurements, the system may account for a wider range of potential error sources. This approach may lead to more robust localization, as it considers both static (map-based) and dynamic (measurement-based) sources of uncertainty.

In various examples, the method may include performing a threshold comparison. This threshold comparison may be between the uncertainty information and a predetermined uncertainty threshold. The method may further include selectively activating an operational mode of the agent. This activation may depend on a result of the threshold comparison.

A threshold comparison may be understood as a process of evaluating whether a certain value (in this case, the uncertainty information) exceeds or falls below a predefined limit. An operational mode may be understood as a specific set of behaviors or parameters that govern the agent's functioning under certain conditions.

By comparing the uncertainty information to a predetermined threshold, the system may dynamically adjust its behavior based on the reliability of its localization. When the uncertainty exceeds the threshold, indicating a less reliable position estimate, the agent may activate a more cautious operational mode. This could involve reducing speed, increasing sensor sampling rates, or prioritizing safety maneuvers. Conversely, when the uncertainty information (i.e., one or more uncertainty values) is below the threshold, the agent may operate in a more efficient or performance-oriented mode. This adaptive approach may allow the agent to balance between optimal performance and safety, depending on the confidence in its localization. Furthermore, this arrangement may provide a mechanism for fail-safe operation, where the agent can automatically switch to a conservative mode or even initiate a safe stop procedure if localization uncertainty becomes unacceptably high. This may be particularly valuable in safety-critical applications or in environments with varying levels of map accuracy in combination with low sensor reliability.

In various examples, the uncertainty information may be determined based on a spatial relationship. This spatial relationship may be between the localization information and the one or more map elements.

A spatial relationship may be understood as the relative positioning or geometric configuration between two or more entities in space. In this context, it may refer to how the agent's estimated position and/or orientation (i.e., pose) relates to the positions and/or orientations of the one or more map elements.

An effect of this arrangement may be a more context-aware and dynamic assessment of localization uncertainty. By considering the spatial relationship between the agent's estimated position and nearby map elements, the system may adjust its uncertainty estimates based on the specific agent's position and/or orientation in the environment towards the one or more map elements. For instance, when the agent is closer to well-defined map elements, the uncertainty might be lower due to increased reliability of feature matching. In various examples, the uncertainty map data may be direction-dependent.

In various examples, the spatial relationship may comprise a position and/or orientation or pose of the agent. This pose may be relative to the one or more map elements. The uncertainty information may be determined based on a subset of the multiple positional uncertainty values. These positional uncertainty values may be from the localization map data. The subset may be along one of the multiple spatial directions. This direction may correspond to the orientation of the agent towards each map element.

A pose may be understood as the combined position and orientation of the agent in space, which for example define a perspective of the agent towards the one or more map elements. A subset of positional uncertainty values may be understood as a selected portion of the available uncertainty data, chosen based on specific criteria.

An effect of this arrangement may be a more precise and orientation-specific assessment of localization uncertainty. By considering the agent's pose relative to map elements, the system may derive its uncertainty estimates specific to the agent's current position and/or orientation and/or current moving direction. This may lead to more accurate uncertainty assessments, as the reliability of map features often depends on the orientation from which they are observed. By selecting a subset of uncertainty values based on the agent's orientation, the method may focus on the relevant uncertainty data for the current situation. It would be possible, when an agent is moving forward, the forward-facing uncertainty values may be prioritized over lateral ones. This approach may result in more efficient computational processing and more relevant uncertainty estimates. It may also enable more sophisticated navigation strategies, where the agent could adjust its orientation to minimize uncertainty in its primary direction of movement. This orientation-aware uncertainty estimation may enhance the agent's ability to navigate safely in complex environments, particularly in scenarios where the reliability of map elements varies with viewing angle.

In various examples, the uncertainty map data may specify an uncertainty (or individual uncertainty data) of each map element. This uncertainty may be specified as a static uncertainty value or distribution. Specifically, it may comprise a (static) covariance matrix. In other examples, it may be specified as a function of a pose of the agent in the scene.

A static uncertainty value or distribution may be understood as a fixed representation of uncertainty. A covariance matrix may be understood as a mathematical representation of potential errors in multiple dimensions. A function of a pose may be understood as a representation of uncertainty that changes based on the agent's position and orientation in the environment.

This approach may account for how the reliability of certain map elements can change based on the agent's perspective or distance. For instance, the uncertainty of a distant landmark might increase as the agent moves farther away, or the uncertainty of a feature might vary depending on the angle from which the map element is observed.

In various examples, the method may include determining a localization hypothesis. This hypothesis may be associated with the perspective of the agent. The method may further include performing a plausibility determination. This determination may be performed for at least one of the one or more map elements. The plausibility determination may be based on the localization hypothesis. The method may also include determining the localization information and/or the uncertainty information. This determination may take into account the plausibility determination.

A localization hypothesis may be understood as a proposed estimate of the agent's position and/or orientation in the environment. A plausibility determination may be understood, for example, as an assessment of how likely or reasonable it is for a map element to be observed from the hypothesized agent position.

An effect of this arrangement may be improved robustness and accuracy in localization. By formulating a localization hypothesis and then testing the plausibility of observed map elements against this hypothesis, the system may detect and account for potential inconsistencies or errors in either the sensor data or the map data. This approach may help identify situations where the map might be outdated or where sensor readings might be unreliable. For instance, if a map element is observed in a location where it should not be visible according to the localization hypothesis, this could indicate an error in the hypothesis or a change in the environment. By incorporating this plausibility check into the determination of localization and uncertainty information, the system may produce more reliable and context-aware estimates of the agent's position and the associated uncertainty. This may lead to more robust navigation in dynamic or partially mapped environments, and may help the system detect and adapt to changes in the environment that are not yet reflected in the map data.

In various examples, taking into account the plausibility determination may comprise one or more actions. These actions may be performed based on, or using, a result of the plausibility determination. The method may include assigning a reliability weighting to each of the at least one of the one or more map elements. Alternatively, the method may include selectively excluding at least one of the one or more map elements. This exclusion may be from subsequent localization information and/or uncertainty information determination.

A reliability weighting may be understood as a numerical value or factor assigned to a map element, indicating the degree of trust or confidence in its accuracy or relevance for localization. Selectively excluding may be understood as the process of omitting certain map elements from further calculations.

An effect of this arrangement may be a more precise and adaptive approach to utilizing map elements in localization. By assigning reliability weightings based on plausibility, the system may give more importance to map elements that are consistent with the current localization hypothesis, potentially leading to more accurate position estimates. This weighting approach may allow the system to handle situations where some map elements are less reliable or partially occluded, rather than completely discarding them. Alternatively, the option to selectively exclude implausible map elements may help prevent erroneous or outdated information from the localization results. This may be particularly valuable in dynamic environments where certain features might have changed since the map was created. Furthermore, this adaptive approach to map element utilization may enhance the system's resilience to partial map uncertainties or sensor errors, potentially improving localization performance in changing environments.

In various examples, performing the plausibility determination may comprise comparing a visibility. This visibility may be of the at least one of the one or more map elements in the perspective of the agent. The visibility may be based on the localization hypothesis. The comparison may be with predetermined visibility information. This predetermined visibility information may be associated with each of the one or more map elements in the map database.

Visibility may be understood as the extent to which a map element can be observed or detected from a particular pose. Predetermined visibility information may be understood as pre-recorded data about the expected observability of map elements from various positions and/or angles (poses).

An effect of this arrangement may be an improved context-aware plausibility assessment. By comparing the expected visibility of map elements based on the current localization hypothesis with predetermined visibility information, the system may detect inconsistencies between the agent's perceived environment and the map data. This approach may enable the identification of potential errors in the localization hypothesis or changes in the environment that are not reflected in the map. For instance, if a map element is visible in the agent's perspective but should be occluded according to the map data, this may indicate an uncertainty in the estimated position or a change in the environment. Additionally, this visibility-based plausibility check may help in handling dynamic environments more effectively. It may allow the system to adapt to temporary occlusions or changes in the visibility of landmarks, potentially improving localization accuracy in complex or changing scenes. Furthermore, this method may contribute to more robust outlier detection in sensor measurements, as map elements that are implausibly visible or invisible given the current hypothesis can be flagged for further scrutiny or assigned lower weights in the localization process.

The uncertainty map data may comprise directional uncertainty map data, or directional uncertainties. Directional uncertainties in the context of map element data refer to the variation in measurement or estimation errors depending on the orientation or perspective from which a map element is observed. The magnitude of uncertainty may vary along different spatial axes or directions. Uncertainties can be represented as vectors or tensors, capturing both magnitude and direction of uncertainties.

The resulting uncertainty information for the agent's localization information may be expressed in various forms, such as covariance matrices, probability distributions, or confidence intervals. It can be directionally dependent, reflecting how uncertainty varies along different spatial axes or in relation to specific map elements. This directional aspect is particularly relevant when considering the agent's orientation and movement, as uncertainties may propagate differently in the direction of travel compared to lateral directions.

The uncertainty map data describes not only the magnitude of the uncertainty but also its directional dependence. In a 2D localization scenario, for example, the covariance matrix would be a 2 x 2 matrix where the diagonal elements represent the variances in the x and y directions, and the off-diagonal elements represent the correlation between the uncertainties in these directions. This allows for a more precise description of the uncertainty ellipse, indicating that the uncertainty may be larger in some directions than others. In 3D localization, the covariance matrix would be a 3 x 3 matrix capturing the variances and correlations in the x, y, and z directions. By incorporating this directional dependence of the uncertainty, the localization system can more accurately propagate and update the uncertainty estimates throughout the mapping and localization process. Other direction-dependent uncertainty representations associated with map elements are possible.

In general, a map element may also be referred to as map feature corresponding to a landmark.

Although the invention has been shown and described with respect to certain preferred embodiments, equivalents and modifications will occur to those skilled in the art upon the reading and understanding of the specification. The present invention includes all such equivalents and modifications and is limited only by the scope of the appended claims.

*Independent of the grammatical term usage, individuals with male, female or other gender identities are included within the term.*

List of Reference

| 1 | agent |
|---|---|
| 2 | control device |
| 3 | sensor |
| 4 | processor |
| 5 | memory |
| 110 | object |
| 111 | landmark |
| 112 | location map element data |
| 113 | uncertainty map element data |
| 120, 130 | mapping perspectives |
| 123, 133 | known agent poses |
| 121, 131 | observed landmarks |
| 150, 160 | agent perspectives |
| 151, 161 | observed landmarks |
| 152, 162 | measurement-based uncertainty information |
| 170, 180 | agent perspectives |
| 171, 181 | observed object positions |
| 172, 182 | perspective spatial uncertainties |
| 410 | viewing direction |
| 411,412,413 | map elements |
| 421, 422, 423 | observability vectors |
| 300 | map database |
| R1, R2 | agent poses |
| $\Delta$R1, $\Delta$R2 | localization uncertainties |

**Claims**

1. A computer-implemented method, comprising:

    - obtaining agent sensor data observing a scene from a perspective of an agent;
    - accessing a map database to obtain localization map data for one or more map elements arranged in the perspective of the scene and associated uncertainty map data for the one or more map elements;
    - determining localization information for the agent in the scene based on a comparison of the sensor data and the localization map data;
    - determining uncertainty information for the localization information based on the uncertainty map data; and
    - controlling the agent or a further agent based on the localization information and/or the uncertainty information.

2. The computer-implemented method of claim 1, wherein the uncertainty map data is indicative of multiple positional uncertainty values of the localization map data associated with each of the one or more map elements along each of multiple spatial directions.

3. The computer-implemented method of claim 1 or 2, wherein the uncertainty information is based on:

    - map-based uncertainty information derived from the uncertainty map data; and
    - measurement-based uncertainty information derived from the agent sensor data.

4. The computer-implemented method of any one of the preceding claims, further comprising:

    - performing a threshold comparison between the uncertainty information and a predetermined uncertainty threshold; and
    - selectively activating an operational mode of the agent depending on a result of the threshold comparison.

5. The computer-implemented method of any one of the preceding claims, wherein the uncertainty information is determined based on a spatial relationship between the localization information and the one or more map elements.

6. The computer-implemented method of claims 2 and 5, wherein:

   - the spatial relationship comprises a pose of the agent relative to the one or more map elements; and
   - the uncertainty information is determined based on a subset of the multiple positional uncertainty values of the localization map data along one of the multiple spatial directions based on the orientation of the agent.

7. The computer-implemented method of any one of the preceding claims, wherein the uncertainty map data specifies an uncertainty of each map element as either:

   (i) a static uncertainty value or distribution, specifically a covariance, or
   (ii) a function of a pose of the agent in the scene.

8. The computer-implemented method of any one of the preceding claims, wherein controlling the agent comprises controlling the agent to store or stream at least part of the agent sensor data or further sensor data associated with the localization information and/or the uncertainty information.

9. The computer-implemented method of one of claims 2 to 8, wherein determining the uncertainty information further comprises:

   - propagating the positional uncertainty values associated with each of the one or more map elements to:

     (i) agent sensor uncertainty information associated with the agent sensor data, and/or
     (ii) the localization uncertainty information associated with the agent's determined position in the scene.

10. The computer-implemented method of any one of the preceding claims, further comprising:

    - determining a localization hypothesis associated with the perspective of the agent;
    - performing a plausibility determination on at least one of the one or more map elements based on the localization hypothesis; and
    - determining the localization information and/or the uncertainty information taking into account the plausibility determination.

11. The computer-implemented method of claim 10, wherein taking into account the plausibility determination comprises, based on a result of the plausibility determination:

    - assigning a reliability weighting to each of the at least one of the one or more map elements; or
    - selectively excluding at least one of the one or more map elements from subsequent localization information and/or uncertainty information determination.

12. The computer-implemented method of claim 10 or 11, wherein performing the plausibility determination comprises:

    - comparing a visibility of the at least one of the one or more map elements in the perspective of the agent, based on the localization hypothesis, with predetermined visibility information associated with each of the one or more map elements in the map database.

13. A method for generating a map database, comprising:

    - obtaining sensor data of a scene from multiple agent perspectives;
    - determining localization map data for one or more map elements in the scene based on the sensor data;
    - calculating uncertainty map data for the one or more map elements based on variations in the sensor data from the multiple agent perspectives; and
    - storing the localization map data and the uncertainty map data in the map database for subsequent use in agent localization and control.

14. A control device for an agent, the control device comprising:

    - a sensor interface configured to receive agent sensor data observing a scene from a perspective of the agent;
    - a processor; and
    - a memory storing a map database, and instructions that, when executed by the processor, cause the control device to perform the method according to any one of claims 1 to 13.

15. A non-transitory computer-readable medium storing instructions that, when executed by one or more processors, cause the one or more processors to perform the method any one of claims 1 to 13.

# FIG 1

FIG 2

[111, 112, 113]

FIG 3

FIG 4

## FIG 5

- S10
- S20
- S30
- S40
- S50
- S60
- S70

## FIG 6

- T10
- T20
- T30
- T40
- T50
- T60

FIG 7

Europäisches
Patentamt

European
Patent Office

Office européen
des brevets

## EUROPEAN SEARCH REPORT

**Application Number**

EP 24 20 3481

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/121161 A1 (EADE ETHAN [US] ET AL) 17 May 2012 (2012-05-17) | 1-5,7-9, 14,15 | INV. G01C21/30 G01S5/16 |
| A | * paragraphs [0100], [0113], [0116], [0118] - [0129]; figure 3 * * paragraphs [0164] - [0170]; figures 3,7,8 * | 6,10-13 | |
| X | KR 2019 0109645 A (HYUNDAI MOBIS CO LTD [KR]) 26 September 2019 (2019-09-26) | 1-5,7-9, 14,15 | |
| A | * paragraphs [0071] - [0085], [0115], [0116]; figure 1 * | 6,10-13 | |
| A | WO 2022/125322 A1 (ZOOX INC [US]) 16 June 2022 (2022-06-16) * paragraphs [0012], [0015] * * paragraphs [0021] - [0038], [0078], [0116] - [0124]; figures 1,6 * | 1-15 | |
| X | US 11 761 780 B1 (DUENAS ARANA GUILLERMO [US] ET AL) 19 September 2023 (2023-09-19) * column 3, line 47 - column 5, line 27; figure 1 * | 13 | |
| | | | **TECHNICAL FIELDS SEARCHED (IPC)** G01C G01S |

The present search report has been drawn up for all claims

| Place of search | Date of completion of the search | Examiner |
|---|---|---|
| The Hague | 13 March 2025 | Bruinsma, Maarten |

EPO FORM 1503 03.82 (P04C01)

## ANNEX TO THE EUROPEAN SEARCH REPORT
## ON EUROPEAN PATENT APPLICATION NO.

EP 24 20 3481

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2025

| Patent document cited in search report | Publication date | Patent family member(s) | | Publication date |
|---|---|---|---|---|
| US 2012121161 A1 | 17-05-2012 | AU | 2011305154 A1 | 18-04-2013 |
| | | CA | 2812723 A1 | 29-03-2012 |
| | | EP | 2619742 A1 | 31-07-2013 |
| | | EP | 3327697 A1 | 30-05-2018 |
| | | JP | 5745067 B2 | 08-07-2015 |
| | | JP | 5881790 B2 | 09-03-2016 |
| | | JP | 6410530 B2 | 24-10-2018 |
| | | JP | 2013537995 A | 07-10-2013 |
| | | JP | 2014222550 A | 27-11-2014 |
| | | JP | 2014222551 A | 27-11-2014 |
| | | US | 2012121161 A1 | 17-05-2012 |
| | | US | 2016154408 A1 | 02-06-2016 |
| | | WO | 2012040644 A1 | 29-03-2012 |
| KR 20190109645 A | 26-09-2019 | NONE | | |
| WO 2022125322 A1 | 16-06-2022 | CN | 116324928 A | 23-06-2023 |
| | | EP | 4260154 A1 | 18-10-2023 |
| | | JP | 2023553238 A | 21-12-2023 |
| | | WO | 2022125322 A1 | 16-06-2022 |
| US 11761780 B1 | 19-09-2023 | NONE | | |

EPO FORM P0459

For more details about this annex : see Official Journal of the European Patent Office, No. 12/82